# EUROPEAN PATENT SPECIFICATION

(11) **EP 2 026 419 B1**
(45) Date of publication and mention of the grant of the patent: **09.03.2016**
(21) Application number: 08007959.3
(22) Date of filing: 24.04.2008
(51) Int. Cl.: H01R 13/52, H02G 15/113

(54) **Protection box for electric connections**
Schutzkasten für elektrische Anschlüsse
Boîte de protection pour connexions électriques

(30) Priority: 10.07.2007 IT fi20070050
(43) Date of publication of application: 18.02.2009
(73) Proprietor: STEAB S.p.A., 50141 Firenze (IT)
(72) Inventor: Pini, Belisario, 50141 Firenze (IT)
(74) Representative: Strasser, Wolfgang

(56) References cited:
- EP-A1- 1 760 856
- WO-A1-94/09533
- WO-A1-96/08855
- US-A- 5 397 859

## Description

The present invention relates to a protection box for electric connections. It is known that in the construction of some kind of electric plants it is necessary to house the connectors in suitable casings to protect them from water sprays or other liquids.

WO 94/09533, WO 96/08855, US 5397859 and EP 1760856 disclose protection boxes for electric connections comprising two half-shells that delimit an inner compartment inside which a block terminal can be positioned.

The present invention proposes a protection box for electric connections which is particularly safe, easy and cheap to be made, and offers a high degree of protection for electric connections from water or other spraying liquids.

These results have been achieved according to the present invention by adopting the idea of realising a device having the features described in claim 1.

Further features of the present invention are the subject of the dependent claims.

The advantages of the present invention basically consist in the possibility of effectively protecting electric connections from water sprays or other liquids by means of a structure which is easy to realise, cheap, reliable and safe. Moreover, a protection box for electric connections according to the present invention is easy to use and can guarantee the effective locking of the electric wires or cables destined to be connected.

These and other advantages and characteristics of the invention will be best understood by anyone skilled in the art from a reading of the following description in conjunction with the attached drawings given as a practical exemplification of the invention, but not to be considered in a limitative sense, wherein:
- Fig 1 shows a perspective view of a protection box according to the present invention, in the closed or operating position;
- Fig. 2 shows a later 1 view of the protection box of Fig. 1;

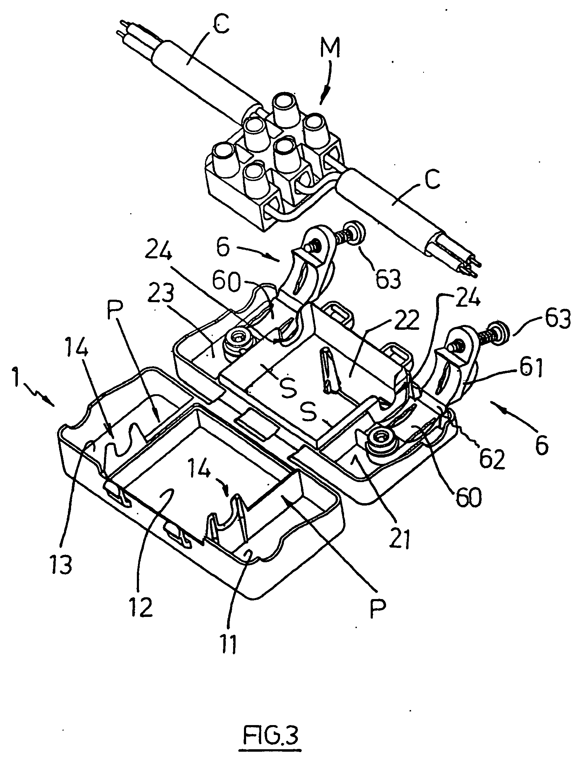

- Fig. 3 shows a perspective view of the protection box of Fig. 1 in an open configuration, that is to say, when it is ready to receive a terminal board through which the connections are made;
- Fig. shows a top plan view of the protection box alone;
- Fig. 5 represents the elements of Fig. 3 with the terminal board introduced into the corresponding seat and with the electric cables or wires in the locked condition;
- Fig. 6 is a cross-section view of the group shown in Fig.5;
- Fig. 7 represents a detail concerning the fixing of the protection bo according to the present invention to a support positioned underneath;

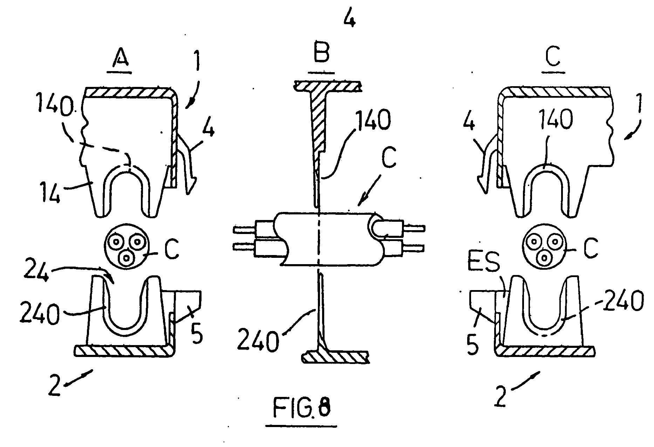

- Figs 8A-8C show three sectional views relative to the present protection box just before to be closed;
- Figs 9A-9 represent two sectional views relative to the present protection box when it is closed;
- Figs 10 and 11 represent two details of the present protection box in the closed position to show the surmounting edges of the two half shells.

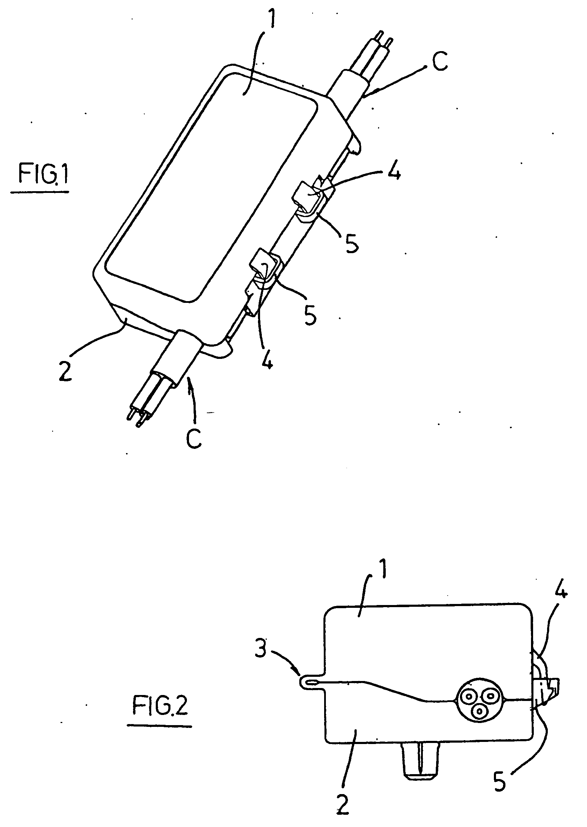

Reduced to its essential structure and with reference to the enclosed drawings, a protection box for electric connections according to the present invention compri es two half shells (1,2) each internally divided so as to provide three compartments (11, 12, 13; 21, 22, 23) separated form each other: for each half shell (1, 2) there are two end compartmen s (11, 13; 21, 23) and a central compartment (12, 22). The half shells (1,2) are joined to each other by means of a hinge consisting of two strings made of the same plastic material of which the two half shells (1,2) are made. n one of the external sides on the first half shell there are two hooks (4) which are destined to be hooked to two corresponding eyelets (5) jutting out of the homologous external side of the second half shell (2) w en the protection box is in its closed position (as shown in Fig. 1 and in Fig.2).

On each of its sides (P) which separate it from the other compartments (11,13), the central compartment (12) of the first half shell (1) features a "U shaped" extension (14) which projects above its corresponding edge (EP). In practice, said extensions (14) define two "U"-shaped bodies projecting above the edges (EP) of the sides (P) separating the central compartment (12) of the first half shell (1) from the corresponding end compartments (11, 13).

Similarly, the central compartment (22) of the second alf shell features a "U"-shaped cavity (24) on each of its sides (S) which separate it from the other two compartments (21, 23) and said cavity develops both above and underneath the corresponding edge (ES).

The extensions (14) of the irst half shell (1) feature a depressed zone (140) facing the respective end compartments (11, 13) and the cavities (24) of the second half shell (2) feature a depressed zone (240) facing the in ide of the corresponding central compartment (22).

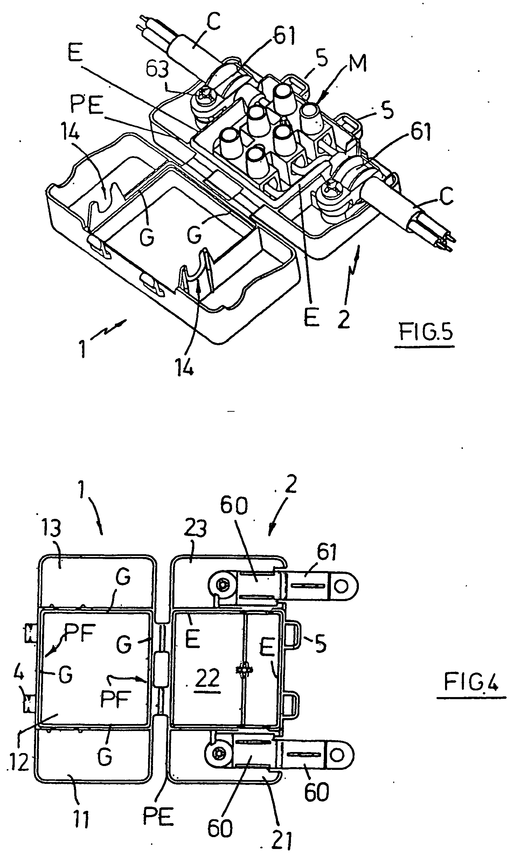

Moreover, as shown in Figs.4, 5, 10 and 11, said sides (P) of the central compartment (11) of the first half shell (1) and the other two sides (PF) of the same compartment feature a step (G) along their whole internal edge. In other terms, the upper edge of the four sides (P, PF) w ich delimit the central compartment (12) of the half shell (1) is step-shaped. The edge (E) of each of the four sides which delimit the central compartment (22) of the second half shell (2) is raise with respect to its perimetral edge (PE) of the latter.

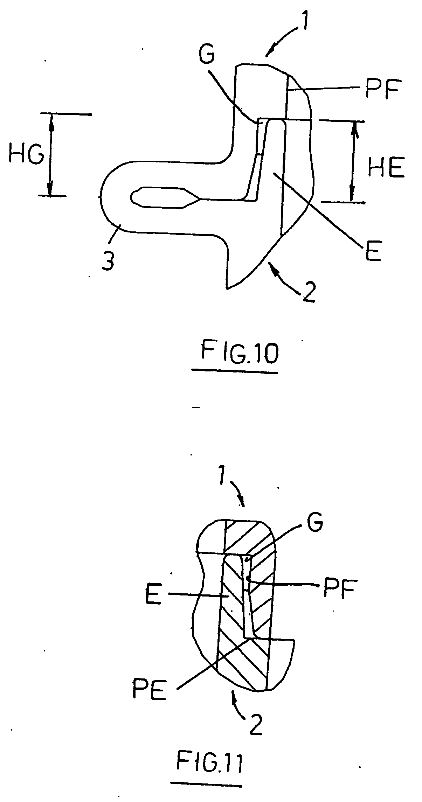

Therefore, as shown in Fig. 10 and Fig. 11, when the box is closed -by positioning the first half shell (1) onto the second half shell (2), in correspondence of the compartment provi ed by the overlapping of the central compartments (12, 22) of the two half shells-the step (-G) covers the edge (E).

The nominal height (HG) of the step (G) and the nominal height (HE) of the raised edge (E) are identical to each other.

A cable clamp (6) is provided inside each of the two compartments (21, 23) of the second half shell (2).

Each of the two cable clamps (6) consists of two jaws (60, 61) joined to each other y means of a string hinge (62). One jaw (60) is fixed and is provided on the base of the corresponding compartment (21; 23). The other jaw (61) can rotate on the fixed jaw thanks to the hinge (62). The free ends of the two jaws are p erced and can be clamped onto each other by means of a screw (63).

The protection box described above can be used as follows.

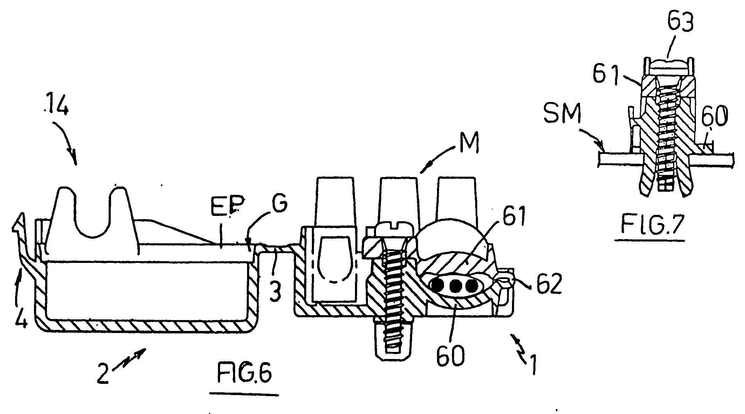

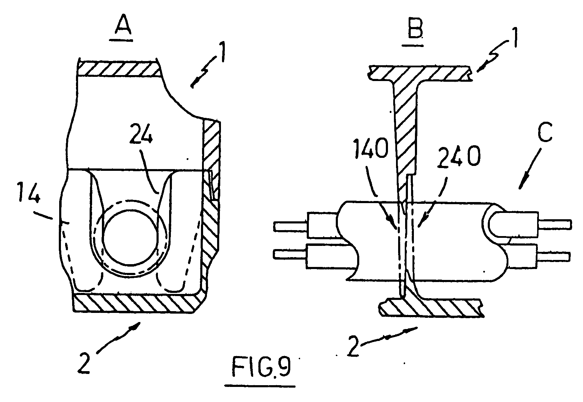

The block terminal or terminal junction box (M) which realises the electric connection among the wires of the cables (C) is positioned in the central compartment (22) of the second half shell (2) so that the cables (C) pass through the depressions (24) provided on the sides (S) of the compartment itself (22) and on the fixed jaws (60) of the cable clamps (6). Then. the cables (C) are locked by fixing each of the mobile jaws (61) onto the corresponding fixed jaw (0) by means of a corresponding screw (63). As shown in Fig. 7, the screw (63) can be used to fix the present protection box to a support underneath (SM). At this point, the first half shell (1) is positioned onto the second half shell (2). Thanks to the positioning of the first half shell onto the second half shell, the chamber provided by the overlapping of the compartments (12, 22) in which the block terminal or terminal junction box (M) is positioned, is spray resistant. In fact, the step (G) of the compartment 12) covers entirely the edge (E) of the compartment (22). Moreover, as shown in Fig. 9B, the surfaces of the said depressions (140) fit together with the homologous depressions (240) respectively provided by the extensions (14) and the cavities (24). Thanks to the said depressions (140) and (240), the extensions (14) and the cavities (24) are flexible, thus being capable of adapting their shape to the external diameter of the cables (C). At the same time, the cable clamps result closed within corresp nding closed chambers defined by the overlapping of the end compartments (11, 13, 21, 23) of the two half shells.

It is to be understood that the drawing shows only an example provided solely as a practical demonstration of the invention, and that this invention may be varied in its forms and dispositions without departure from the scope of the guiding concept of the invention. The presence of any reference numbers in the enclosed claims has the purpose of facilitating the reading of the claims wi h reference to the description and to the drawing, and does not limit the scope of protection represented by the claims.

## Claims

1. Protection box for electric connections comprising a first and a second half shell (1,2) which can be hooked to each other and overlapped onto each other so as to form a box shaped body with a seat for an electric block terminal or terminal junction box (M), wherein said seat is provided by the overlapping of two compartments (12, 22) each of which is centrally provided by a corresponding half shell (1,2) and the sides which delimit one of said compartments surmount and cover the sides which delimit the other compartment, **characterized in that** each of said half shells (1,2) is internally divided into three compartments (11,12,13; 21,22,23) so that each of the two half shells features two end compartments (11,13; 21,23) and a central compartment (12,22), and the sides (P,PF) of one of the said compartments (11) feature a step (G) along their whole edge and **in that** the edge (E) of the sides which delimit the other compartment (22) is raised with respect to the perimetral edge (PE) of the respective half shell (2).

2. Protection box for electric connections according to claim 1 **characterised in that** said compartment (12) of the first half shell (1) features, on each of its sides, a "U" shaped extension which projects above its corresponding edge (EP) and **in that** said compartment (22) of the second half shell (2) features, on each of its sides, a "U" shaped cavity which develops both above and beyond its corresponding edge (ES).

3. Protection box for electric connections according to claim 2 **characterised in that** said extensions (14) of the first half shell (1) feature a depressed zone (140) facing the respective end compartments (11, 13) and the cavities (24) of the second half shell (2) feature a depressed zone (240) facing the inside of the corresponding central compartment (22).

4. Protection box for electric connections according to claim 1 **characterised in that** it is provided with two cable clamps (6), each of said cable clamps being provided externally and laterally to the said compartment (22) of one of the two half shells.

5. Protection box for electric connections according to claims 1 and 4 **characterised in that** each of said cable clamps is provided within a corresponding end compartment (21,23) of one of the two half shells.

## Patentansprüche

1. Schutzkasten für elektrische Anschlüsse, der eine erste und eine zweite Halbschale (1, 2) umfasst, die aneinander angehängt und miteinander so überlappt werden können, dass sie einen kastenförmigen Körper mit einem Sitz für einen elektrischen Blockanschluss oder eine Anschluss-Verbindungsbox (M) bilden, wobei der Sitz durch die Überlappung von zwei Fächern (12, 22) gebildet wird, von denen jedes in der Mitte einer entsprechenden Halbschale (1, 2) vorgesehen ist, und wobei die Seiten, welche das eine der beiden Fächer begrenzen, die Seiten übergreifen und abdecken, die das andere Fach begrenzen, **dadurch gekennzeichnet, dass** jede der Halbschalen (1, 2) im Inneren in drei Fächer (11, 12, 13; 21, 22, 23) unterteilt ist, sodass jede der beiden Halbschalen zwei Endfächer (11, 13; 21, 23) und ein zentrales Fach (12, 22) aufweist, und dass die Seiten (P, PF) des einen dieser Fächer (11) längs ihrer gesamten Kante eine Stufe (G) aufweisen, und dass der Rand (E) der Seiten, die das andere Fach (22) begrenzen, höher als der umlaufende Rand (PE) der betreffenden Halbschale (2) ist.

2. Schutzkasten für elektrische Anschlüsse nach Anspruch 1, **dadurch gekennzeichnet, dass** das Fach (12) der ersten Halbschale (1) an jeder seiner Seiten einen "U"-förmigen Ansatz aufweist, der über seine entsprechende Seite (EP) vorsteht, und dass das Fach (22) der zweiten Halbschale (2) auf jeder seiner Seiten eine "U"-förmige Vertiefung aufweist die sich sowohl oberhalb des entsprechenden Randes (ES) als auch über diesen erstreckt.

3. Schutzkasten für elektrische Anschlüsse nach Anspruch 2, **dadurch gekennzeichnet, dass** die Ansätze (14) der ersten Halbschale (1) eine vertiefte Zone (140) aufweisen, die auf die betreffenden Endfächer (11, 13) zuweist, und dass die Vertiefungen (24) der zweiten Halbschale (2) eine vertiefte Zone (240) aufweisen, die in das Innere des entsprechenden zentralen Faches (22) weist.

4. Schutzkasten für elektrische Anschlüsse nach Anspruch 1, **dadurch gekennzeichnet, dass** er mit zwei Kabelklemmen (6) versehen ist, wobei jede dieser Kabelklemmen außerhalb und seitlich des Faches (22) einer der beiden Halbschalen vorgesehen ist.

5. Schutzkasten für elektrische Anschlüsse nach den Ansprüchen 1 und 4, **dadurch gekennzeichnet, dass** jede der Kabelklemmen innerhalb eines entsprechenden Endfaches (21, 23) einer der beiden Halbschalen vorgesehen ist.

## Revendications

1. Boîte de protection pour connections électriques, comprenant un premier et une deuxième demi coque (1,2) qui peuvent être accroché l'un à l'autre et qui peuvent être superposés de façon à former une boîte avec un logement pour un connecteur à connexion électrique (M), où ledit logement est formé par la superposition de deux compartiments (11,21) chacun desquels est présenté de façon centrale par une demi coque correspondante (1,2) et les côtés qui délimitent un desdits logement superposent et couvrent les côtés qui délimitent l'autre compartiment, **caractérisée en ce que** chacune desdites demi coques (1,2) est subdivisée en trios compartiments intérieurement (11,12,13 ; 21,22,23) ainsi que pour chacune des deux demi coque (1,1) on a deux compartiments d'extrémité (11,13 ; 21,23) et un compartiment centrale (12,22), et les côtés (P,PF) dudit compartiment (11) présentent une marche (G) qui se développe le long de tout leur bord externe et un ce que le bord (E) des les côtés qui délimitent ledit compartiment (22) de la demi coque (2) est surélevé par rapport au bord périmétral (PE) de la demi coque respective (2).

2. Boîte de protection pour connections électriques selon la revendication 1 **caractérisée en ce que** ledit compartiment (12) de la première demi coque (1) présente, sur chacun des ses côtés (P), un appendice (14) en forme de « U » qui résulte développée intérieurement au-dessus du bord relatif (EP) et **en ce que** ledit compartiment (22) de la deuxième demi coque (2) présente, sur chacun des ses côtés (S), une cavité (24) en forme de «U» qui résulte développée soit au-dessus que en dessous du bord relatif (ES).

3. Boîte de protection pour connections électriques selon la revendication 2 **caractérisée en ce que** lesdits appendices (14) de la première demi coque (1) présentent une zone latérale en dépression (140) tournée vers l'externe dudit compartiment (12), tandis que lesdites cavités (24) de la deuxième demi coque (2) présentent une zone latérale en dépression (240) tournée vers l'intérieure du compartiment centrale correspondant (22).

4. Boîte de protection pour connections électriques selon la revendication 1 **caractérisée en ce que** présente deux dispositifs de blocage de câbles (6), chacun desquels est disposé à un côté correspondant dudit compartiment (22), extérieurement à ce dernier.

5. Boîte de protection pour connections électriques selon les revendications 1 et 4 caractérisée en que chacun desdits dispositifs de blocage de câbles est en correspondance d'un compartiment d'extrémité respectif (21,23).
